# EUROPÄISCHE PATENTSCHRIFT

(11) **EP 1 214 505 B1**
(45) Veröffentlichungstag und Bekanntmachung des Hinweises auf die Patenterteilung: **22.12.2004**
(21) Anmeldenummer: 00967537.2
(22) Anmeldetag: 24.08.2000
(51) Int. Cl.: F01N 11/00, F02D 41/14, F02D 41/38

(54) **VERFAHREN ZUM BETREIBEN EINER BRENNKRAFTMASCHINE**
METHOD FOR OPERATING AN INTERNAL COMBUSTION ENGINE
PROCEDE POUR FAIRE FONCTIONNER UN MOTEUR A COMBUSTION INTERNE

(30) Priorität: 04.09.1999 DE 19942270
(43) Veröffentlichungstag der Anmeldung: 19.06.2002
(73) Patentinhaber: ROBERT BOSCH GMBH, 70442 Stuttgart (DE)
(72) Erfinder: WINKLER, Klaus, D-71277 Rutesheim (DE); KOEHLER, Christian, D-74391 Erligheim (DE)
(86) Internationale Anmeldenummer: PCT/DE2000/002900
(87) Internationale Veröffentlichungsnummer: WO 2001/018367

(56) Entgegenhaltungen:
- EP-A- 0 690 213
- EP-A- 0 903 477
- EP-A- 0 931 914
- EP-A- 0 969 194
- DE-A- 19 851 564

## Beschreibung

### Stand der Technik

Die Erfindung betrifft ein Verfahren zum Betreiben einer Brennkraftmaschine insbesondere eines Kraftfahrzeugs, bei dem Kraftstoff in einer fetten und in einer mageren Betriebsart in einen Brennraum eingespritzt wird, bei dem zwischen der fetten und der mageren Betriebsart umgeschaltet wird, und bei dem Stickoxide in einem Katalysator gespeichert werden. Die Erfindung betrifft ebenfalls eine entsprechende Brennkraftmaschine sowie ein Steuergerät für eine derartige Brennkraftmaschine.

Ein derartiges Verfahren, eine derartige Brennkraftmaschine und ein derartiges Steuergerät sind beispielsweise aus der Druckschrift EP 0 690 213 A und des weiteren von einer sogenannten Benzin-Direkteinspritzung bekannt. Dort wird Kraftstoff in einer fetten Betriebsart, z.B. in einem Homogenbetrieb während der Ansaugphase oder in einer mageren Betriebsart, z.B. in einem Schichtbetrieb während der Verdichtungsphase in den Brennraum der Brennkraftmaschine eingespritzt. Der Homogenbetrieb ist vorzugsweise für den Vollastbetrieb der Brennkraftmaschine vorgesehen, während der Schichtbetrieb für den Leerlauf- und Teillastbetrieb geeignet ist. Beispielsweise in Abhängigkeit von einer erwünschten Soll-Betriebsart wird bei einer derartigen direkteinspritzenden Brennkraftmaschine zwischen den genannten Betriebsarten umgeschaltet.

Insbesondere in dem mageren Schichtbetrieb sind NOx-Anteile, also Stickoxide im Abgas vorhanden, die durch einen 3-Wege-Katalysator nicht nachbehandelt werden können. Hierzu ist ein Speicherkatalysator vorgesehen, der die Stickoxide speichert, um sie dann in einer nachfolgenden fetten Betriebsart der Brennkraftmaschine zu konvertieren und wieder abzugeben. Da die Speicherfähigkeit des Speicherkatalysators begrenzt ist, muß dieser ständig be- und entladen werden. Dies kann beispielsweise mit Hilfe eines Lambdasensors vor dem Katalysator dadurch gesteuert und/oder geregelt werden, daß die Speicherfähigkeit des Speicherkatalysators modelliert wird.

Durch die Alterung der Brennkraftmaschine können in der Modellierung Veränderungen und damit Fehler auftreten. Diese Fehler können zu einer bleibenden fehlerhaften Steuerung und/oder Regelung des Be- und Entladens des Speicherkatalysators führen.

Aufgabe der Erfindung ist es, ein Verfahren zum Betreiben einer Brennkraftmaschine zu schaffen, mit dem das Be- und Entladen des Speicherkatalysators auch langfristig korrekt gesteuert und/oder geregelt wird.

Diese Aufgabe wird durch ein Verfahren mit den Merkmalen des Anspruchs 1 gelöst, wobei eine Gütefunktion für die Speicherung von Stickoxiden in dem Katalysator ermittelt wird, und wobei in Abhängigkeit von der Gütefunktion die Umschaltung zwischen den Betriebsarten beeinflußt wird. Bei einer Brennkraftmaschine und einem Steuergerät der eingangs genannten Art wird die Aufgabe erfindungsgemäß entsprechend gelöst.

Aufgrund der Alterung des Katalysators oder aufgrund von Vergiftungen desselben weist die Gütefunktion einen fallenden Verlauf auf. Ändert sich dieser fallende Verlauf, so kann daraus auf eine Änderung der Brennkraftmaschine z.B. aufgrund von Alterung geschlossen werden. In diesem Fall kann das Modell für das Umschalten zwischen den Betriebsarten der Brennkraftmaschine derart adaptiert werden, daß die Gütefunktion wieder in einen fallenden Verlauf übergeht.

Damit ist es möglich, über die Gütefunktion Alterungserscheinungen der Brennkraftmaschine zu erkennen und in dem Steuergerät entsprechend zu berücksichtigen.

Bei einer vorteilhaften Weiterbildung der Erfindung wird die Gütefunktion in Abhängigkeit von der Zeitdauer ermittelt, nach der eine fette Betriebsart durch den Katalysator durchbricht. Das Durchbrechen der fetten Betriebsart kann z.B. mit Hilfe eines dem Katalysator nachgeordneten Lambdasensors festgestellt werden. Das Durchbrechen bedeutet, daß der Katalysator sämtliche gespeicherten NOx-Anteile abgegeben hat und Reduktionsmittel in der Form von "fettem" Abgas zu dem nachgeordneten Lambdasensor gelangt. Die vorgenannte Zeitdauer ist ein Maß für die Speicherfähigkeit des Katalysators. Mit der Zeit wird diese Zeitdauer immer geringer, was die Alterung und/oder Vergiftung des Katalysators darstellt.

Bei einer weiteren vorteilhaften Weiterbildung der Erfindung wird die Gütefunktion in Abhängigkeit von einer Mehrzahl aufeinanderfolgender Zeitdauern ermittelt. Damit wird die Veränderung der Gütefunktion über der Zeit berücksichtigt.

Bei einer vorteilhaften Ausgestaltung der Erfindung wird eine Änderung der Steigung der Gütefunktion ermittelt. Aus dieser Änderung der Steigung der Gütefunktion kann dann auf eine Änderung der Brennkraftmaschine z.B. aufgrund von Alterung geschlossen werden.

Besonders vorteilhaft ist es, wenn die Umschaltung zwischen den Betriebsarten adaptiert wird. Vorzugsweise werden die Be- und/oder Entladezeiten für die Speicherung von Stickoxiden in dem Katalysator adaptiert.

Von besonderer Bedeutung ist die Realisierung des erfindungsgemäßen Verfahrens in der Form eines Steuerelements, das für ein Steuergerät einer Brennkraftmaschine, insbesondere eines Kraftfahrzeugs, vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Steuerelement abgespeichertes Programm realisiert, so daß dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory oder ein Flash-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt ein schematisches Blockschaltbild eines Ausführungsbeispiels einer erfindungsgemäßen Brennkraftmaschine,
- Figur 2: zeigt vier schematische Zeitdiagramme zu einem Ausführungsbeispiel eines erfindungsgemäßen Verfahrens zum Betreiben der Brennkraftmaschine der Figur 1, und
- Figur 3: zeigt ein weiteres schematisches Zeitdiagramm zu dem erfindungsgemäßen Verfahren der Figur 2.

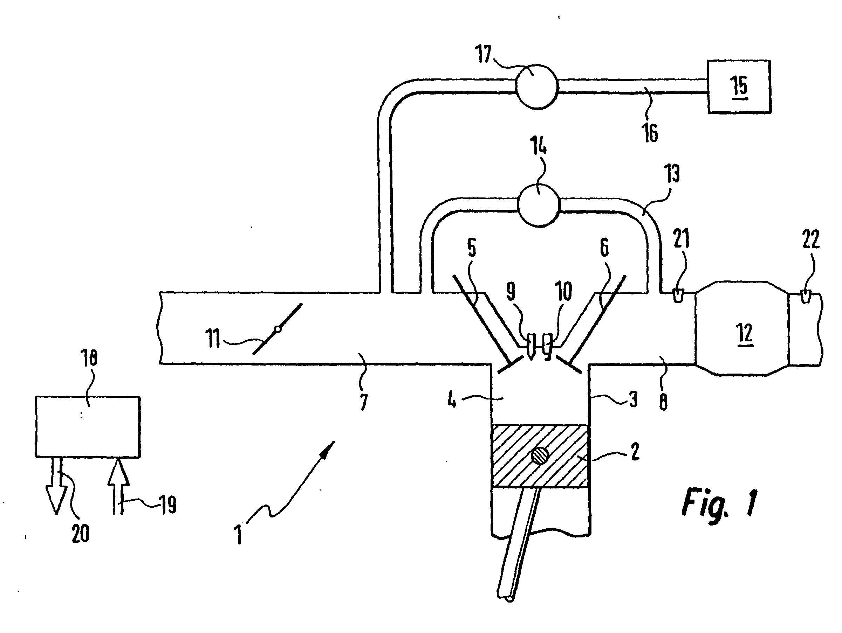

In der Figur 1 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlaßventil 5 und ein Auslaßventil 6 begrenzt ist. Mit dem Einlaßventil 5 ist ein Ansaugrohr 7 und mit dem Auslaßventil 6 ist ein Abgasrohr 8 gekoppelt.

Im Bereich des Einlaßventils 5 und des Auslaßventils 6 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der der Reinigung der durch die Verbrennung des Kraftstoffs entstehenden Abgase dient.

Von dem Abgasrohr 8 führt eine Abgasrückführrohr 13 zurück zu dem Ansaugrohr 7. In dem Abgasrückführrohr 13 ist ein Abgasrückführventil 14 untergebracht, mit dem die Menge des in das Ansaugrohr 7 rückgeführten Abgases eingestellt werden kann. Das Abgasrückführrohr 13 und das Abgasrückführventil 14 bilden eine sogenannte Abgasrückführung.

Von einem Kraftstofftank 15 führt eine Tankentlüftungsleitung 16 zu dem Ansaugrohr 7. In der Tankentlüftungsleitung 16 ist ein Tankentlüftungsventil 17 untergebracht, mit dem die Menge des dem Ansaugrohr 7 zugeführten Kraftstoffdampfes aus dem Kraftstofftank 15 einstellbar ist. Die Tankentlüftungsleitung 16 und das Tankentlüftungsventil 17 bilden eine sogenannte Tankentlüftung.

Der Kolben 2 wird durch die Verbrennung des Kraftstoffs in dem Brennraum 4 in eine Hin- und Herbewegung versetzt, die auf eine nicht-dargestellte Kurbelwelle übertragen wird und auf diese ein Drehmoment ausübt.

Ein Steuergerät 18 ist von Eingangssignalen 19 beaufschlagt, die mittels Sensoren gemessene Betriebsgrößen der Brennkraftmaschine 1 darstellen. Beispielsweise ist das Steuergerät 18 mit einem Luftmassensensor, einem Lambda-Sensor, einem Drehzahlsensor und dergleichen verbunden. Des weiteren ist das Steuergerät 18 mit einem Fahrpedalsensor verbunden, der ein Signal erzeugt, das die Stellung eines von einem Fahrer betätigbaren Fahrpedals und damit das angeforderte Drehmoment angibt. Das Steuergerät 18 erzeugt Ausgangssignale 20, mit denen über Aktoren bzw. Stellern das Verhalten der Brennkraftmaschine 1 beeinflußt werden kann. Beispielsweise ist das Steuergerät 18 mit dem Einspritzventil 9, der Zündkerze 10 und der Drosselklappe 11 und dergleichen verbunden und erzeugt die zu deren Ansteuerung erforderlichen Signale.

Unter anderem ist das Steuergerät 18 dazu vorgesehen, die Betriebsgrößen der Brennkraftmaschine 1 zu steuern und/oder zu regeln. Beispielsweise wird die von dem Einspritzventil 9 in den Brennraum 4 eingespritzte Kraftstoffmasse von dem Steuergerät 18 insbesondere im Hinblick auf einen geringen Kraftstoffverbrauch und/oder eine geringe Schadstoffentwicklung gesteuert und/oder geregelt. Zu diesem Zweck ist das Steuergerät 18 mit einem Mikroprozessor versehen, der in einem Speichermedium, insbesondere in einem Flash-Memory ein Programm abgespeichert hat, das dazu geeignet ist, die genannte Steuerung und/oder Regelung durchzuführen.

Die Brennkraftmaschine 1 der Figur 1 kann in einer Mehrzahl von Betriebsarten betrieben werden. So ist es möglich, die Brennkraftmaschine 1 in einem Homogenbetrieb, einem Schichtbetrieb, einem homogenen Magerbetrieb und dergleichen zu betreiben. Zwischen den genannten Betriebsarten der Brennkraftmaschine 1 kann hin- und her- bzw. umgeschaltet werden. Derartige Umschaltungen werden von dem Steuergerät 18 durchgeführt.

Im Homogenbetrieb wird der Kraftstoff während der Ansaugphase von dem Einspritzventil 9 direkt in den Brennraum 4 der Brennkraftmaschine 1 eingespritzt. Der Kraftstoff wird dadurch bis zur Zündung noch weitgehend verwirbelt, so daß im Brennraum 4 ein im wesentlichen homogenes Kraftstoff/Luft-Gemisch entsteht. Das zu erzeugende Moment wird dabei im wesentlichen über die Stellung der Drosselklappe 11 von dem Steuergerät 18 eingestellt. Im Homogenbetrieb werden die Betriebsgrößen der Brennkraftmaschine 1 derart gesteuert und/oder geregelt, daß. Lambda gleich Eins ist. Der Homogenbetrieb wird insbesondere bei Vollast angewendet.

Im Schichtbetrieb wird der Kraftstoff während der Verdichtungsphase von dem Einspritzventil 9 direkt in den Brennraum 4 der Brennkraftmaschine 1 eingespritzt. Damit ist bei der Zündung durch die Zündkerze 10 kein homogenes Gemisch im Brennraum 4 vorhanden, sondern eine Kraftstoffschichtung. Die Drosselklappe 11 kann, abgesehen von Anforderungen z.B. der Abgasrückführung und/oder der Tankentlüftung, vollständig geöffnet und die Brennkraftmaschine 1 damit entdrosselt betrieben werden. Das zu erzeugende Moment wird im Schichtbetrieb weitgehend über die Kraftstoffmasse eingestellt. Mit dem Schichtbetrieb kann die Brennkraftmaschine 1 insbesondere im Leerlauf und bei Teillast betrieben werden.

Bei dem Katalysator 12 handelt es sich um eine Kombination eines 3-Wege-Katalysators und eines Speicherkatalystors. Mit dem 3-Wege-Katalysator werden unabhängig von der Betriebsart kontinuierlich die schädlichen Bestandteile des Abgases nachbehandelt bzw. umgesetzt. Der 3-Wege-Katalysator ist jedoch nicht in der Lage, die im Schichtbetrieb entstehenden NOx-Anteile des Abgases zu verarbeiten. Hierzu ist der Speicherkatalysator vorgesehen.

Der Speicherkatalysator bindet die NOx-Anteile des Abgases im mageren Betrieb der Brennkraftmaschine 1, also bei Sauerstoffüberschuß, z.B. insbesondere während des Schichtbetriebs. Wird die Brennkraftmaschine 1 danach mit einem Kraftstoffüberschuß, also fett betrieben, so gibt der Speicherkatalysator die gebundenen NOx-Anteile wieder frei, so daß diese von dem 3-Wege-Katalysator reduziert und damit nachbehandelt werden können.

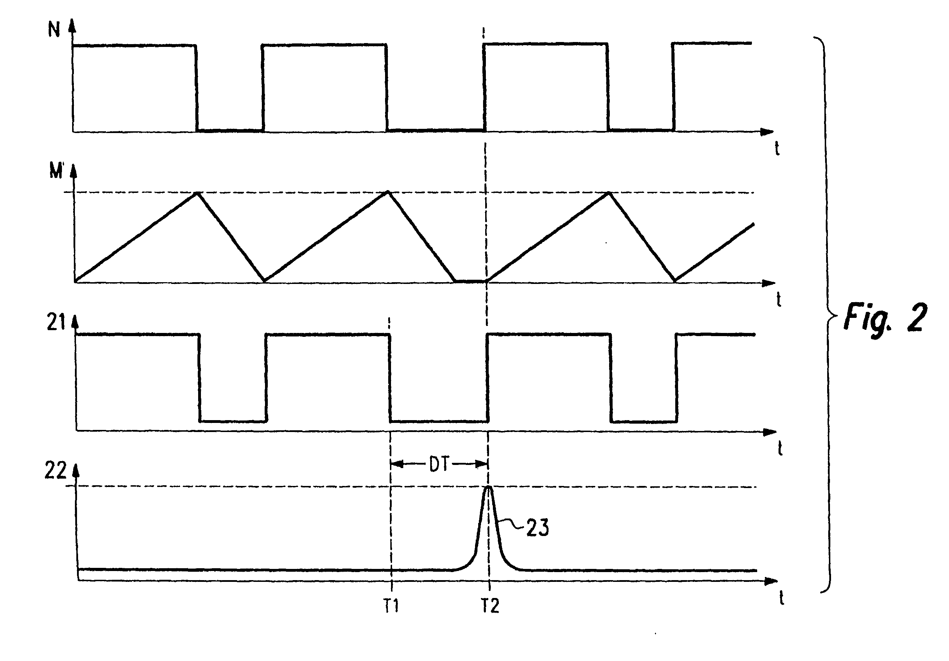

In der Figur 2 sind in dem oberen ersten Zeitdiagramm die NOx-Emissionen N der Brennkraftmaschine 1 schematisch über der Zeit t dargestellt. Aus diesem Zeitdiagramm geht hervor, daß die Brennkraftmaschine 1 während des Schichtbetriebs, also in einer mageren Betriebsart, Stickoxide abgibt, während im Homgenbetrieb, also während einer fetten Betriebsart, die NOx-Rohemissionen keine Rolle spielen und zu Null gesetzt werden.

In der Figur 2 ist in dem zweiten Zeitdiagramm die Masse M der in dem Speicherkatalysator gespeicherten NOx-Anteile schematisch über der Zeit t dargestellt. Aus diesem Zeitdiagramm geht hervor, daß der Speicherkatalysator während des Schichtbetriebs die von der Brennkraftmaschine 1 abgegebenen Stickoxide aufnimmt und speichert. Die Masse M steigt damit stetig an. Während des Homogenbetrieb gibt der Speicherkatalysator die gespeicherten Stickoxide wieder frei, so daß die Masse M wieder stetig abnimmt.

Die Speicherfähigkeit des Speicherkatalysators ist nicht unbegrenzt. Aus diesem Grund wird z.B. mit Hilfe eines Modells die noch vorhandene Speicherkapazität des Speicherkatalysators von dem Steuergerät 18 ermittelt. Sobald die Speicherkapazität aufgrund einer längeren Beladung des Speicherkatalysators erschöpft ist, wird die Brennkraftmaschine 1 von dem Steuergerät 18 in eine fette Betriebsart umgeschaltet, damit der Speicherkatalysator wieder entladen und damit die Speicherkapaziät wieder vergrößert wird. Sobald der Speicherkatalysator entladen ist, kann von dem Steuergerät 18 wieder umgeschaltet und damit der Speicherkatalysator wieder beladen werden.

Aus dieser Modellierung des Speicherkatalysators und der daraus resultierenden Steuerung bzw. Regelung der Betriebsarten der Brennkraftmaschine 1 durch das Steuergerät 18 ergibt sich das in dem ersten und dem zweiten Zeitdiagramm der Figur 2 dargestellte wechselweise Umschalten zwischen dem Schichtbetrieb und dem Homogenbetrieb.

Vor dem Katalysator 12 ist ein Lambdasensor 21 vorgesehen, der mit dem Steuergerät 18 gekoppelt ist, und der dazu vorgesehen ist, das vorstehende Be- und Entladen des Speicherkatalysators zu steuern und/oder zu regeln. Das Ausgangssignal dieses Lambdasensors 21 ist in dem dritten Zeitdiagramm der Figur 2 schematisch dargestellt. Zur Vereinfachung ist dieses Ausgangssignal mit demselben Bezugszeichen gekennzeichnet wie der Lambdasensor 21.

Aus dem Ausgangssignal 21 ist wieder der Betrieb der Brennkraftmaschine 1 im Schichtbetrieb und im Homogenbetrieb ersichtlich. Im Schichtbetrieb weist das Abgas vor dem Katalysator 12, also bei dem Lambdasensor 21 entsprechend dem Ausgangssignal 21 der Figur 2 ein großes Lambda auf, was einem mageren Betrieb der Brennkraftmaschine 1 entspricht. Im Homogenbetrieb hingegen weist das Ausgangssignal 21 ein Lambda von z.B. gleich Eins auf und ist damit kleiner als im Schichtbetrieb.

Nach dem Katalysator 12 ist ein weiterer Lambdasensor 22 vorgesehen, der ebenfalls mit dem Steuergerät 18 gekoppelt ist. Das Ausgangssignal dieses Lambdasensors 22 ist in dem vierten Zeitdiagramm der Figur 2 schematisch dargestellt. Zur Vereinfachung ist dieses Ausgangssignal mit demselben Bezugszeichen gekennzeichnet wie der Lambdasensor 22.

Das Ausgangssignal 22 der Figur 2 zeigt an, wenn eine fette Betriebsart der Brennkraftmaschine 1, z.B. der Homogenbetrieb, durch den Katalysator 12 "durchbricht". Dies ist dann der Fall, wenn der Speicherkatalysator vollständig entladen ist, also keine NOx-Anteile mehr in demselben gespeichert sind. Danach wird Reduktionsmittel in der Form von "fettem" Abgas nicht mehr von den freiwerdenden NOx-Anteilen des Speicherkatalysators gebunden, sondern gelangt zu dem Lambdasensor 22 und erzeugt dort das Ausgangssignal 22.

In den Zeitdiagrammen der Figur 2 wird in einem Zeitpunkt T1 in den Homogenbetrieb umgeschaltet. Ausgehend von diesem Zeitpunkt T1 wird dann ermittelt, wann diese fette Betriebsart "durchbricht". Zu diesem Zweck wird nach dem Zeitpunkt T1 nicht - wie üblich - entsprechend der modellierten gespeicherten Masse M wieder in den Schichtbetrieb zurückgeschaltet, sobald der Speicherkatalysator entladen ist, sondern es wird der Homogenbetrieb darüberhinaus beibehalten.

Daraus ergibt sich dann in dem unteren vierten Zeitdiagramm der Figur 2 in einem Zeitpunkt T2 ein Impuls 23. Dieser Impuls 23 zeigt an, daß die fette Betriebsart nunmehr durch den Katalysator 12 "durchgebrochen" ist.

Im Zeitpunkt T2 des Impulses 23 wird wieder in den Schichtbetrieb zurückgeschaltet. Aufgrund dieses Umschaltens der Brennkraftmaschine 1 von dem Homogenbetrieb in den Schichtbetrieb ist der Impuls 23 nur kurzzeitig vorhanden. Es ist jedoch möglich, anhand des Impulses 23 eine Zeitdauer DT als Differenz zwischen den Zeitpunkten T1 und T2 zu ermitteln.

Die Zeitdauer DT stellt die Verzögerungszeit dar, nach der der Speicherkatalysator nach einem vollständigen Entladen von NOx-Anteilen das ankommende Reduktionsmittel in der Form von "fettem" Abgas nicht mehr bindet, so daß dieses "fette" Abgas zu dem Lambdasensor 22 gelangt und dort den Impuls 23 auslöst. Aufgrund von Alterungserscheinungen und/oder Vergiftungen des Speicherkatalysators wird diese Verzögerungszeit immer kleiner. Der Impuls 23 erscheint also immer früher.

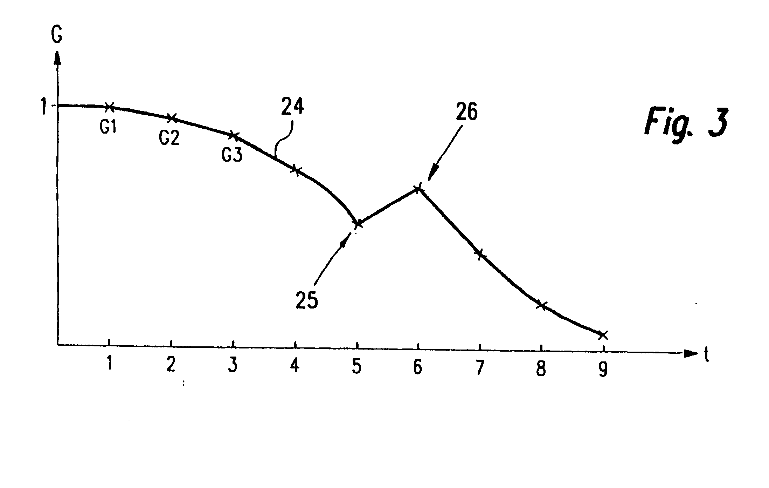

In der Figur 3 ist eine Kurve 24 über der Zeit t aufgetragen, die aus einer Mehrzahl derartiger Zeitdauern DT gewonnen wird. Bei der Kurve 24 handelt es sich um eine Gütefunktion G für den Speicherkatalysator.

In der Figur 3 sind aufeinanderfolgende Zeitpunkte 1, 2, 3, usw. dargestellt, in denen entsprechend den obigen Ausführungen jeweils die Zeitdauer DT und daraus der zugehörige Wert G1, G2, G3, usw. ermittelt worden ist. Die Kurve 24 ergibt sich dann durch die Verbindung dieser Werte G1, G2, G3, usw..

Die Kurve 24 kann beispielsweise durch eine entsprechende Normierung aus den Zeitdauern DT in den aufeinanderfolgenden Zeitpunkten 1, 2, 3, usw. gewonnen werden. Ebenfalls kann die Kurve 24 z.B. auch mit Hilfe eines NOx-Sensors oder dergleichen ermittelt werden.

Wie erläutert worden ist, wird die Zeitdauer DT mit der Zeit immer kleiner. Damit werden auch die zugehörigen Werte G1, G2, G3, usw. immer kleiner. Dies ist auch aus der Kurve 24 der Figur 3 ersichtlich. Das kontinuierliche Fallen der Kurve 24 stellt damit das Verschlechtern des Speicherkatalysators, insbesondere dessen Alterung und/oder Vergiftung dar.

Mit der Zeit verändert sich jedoch auch die Brennkraftmaschine 1. Durch Alterungserscheinungen und dergleichen vermindert sich z.B. die Verdichtung der Brennkraftmaschine 1, was zu einer Erhöhung der Kohlenwasserstoffemissionen und zu einer Verringerung der NOx-Emissionen führt.

Diese Verringerung der NOx-Anteile im Abgas der Brennkraftmaschine 1 hat auch Folgen für die Beladung und Entladung des Speicherkatalysators. So wird z.B. bei gleicher Beladungsdauer der Speicherkatalysator mit weniger NOx-Anteilen beladen als an sich durch das Steuergerät 18 modelliert. Das Modell, in dessen Abhängigkeit von dem Steuergerät 18 das Umschalten zwischen den Betriebsarten der Brennkraftmaschine 1 gesteuert und/oder geregelt wird, entspricht damit nicht mehr dem tatsächlichen Zustand des Speicherkatalysators.

Der Unterschied zwischen dem Modell des Steuergeräts 18 und dem tatsächlichen Zustand des Speicherkazalysators führt dazu, daß nach einer gewissen Zeit die Kurve 24 nicht mehr monoton fällt, sondern wieder ansteigt. Diese Änderung der Kurve 24 ist in der Figur 3 als ein Punkt 25 gekennzeichnet. Aus dem Ansteigen des Kurve 24 wird nunmehr von dem Steuergerät 18 auf eine Veränderung der NOx-Emissionen der Brennkraftmaschine 1 geschlossen, wie dies vorstehend erläutert ist.

Daraufhin adaptiert das Steuergerät 18 das Modell des Speicherkatalysators derart, daß die Kurve 24 wieder monoton fallend wird. Dies ist in der Figur 3 ab einem Punkt 26 der Fall. Insbesondere adaptiert das Steuergerät 18 z.B. die Be- und Entladezeiten des Speicherkatalysators, so daß die Zeitpunkte für das Umschalten zwischen den Betriebsarten der Brennkraftmaschine 1 wieder dem tatsächlichen Beladungszustand des Speicherkatalysators entspricht.

Wie ebenfalls aus der Kurve 24 der Figur 3 zu entnehmen ist, verändert sich schon vor dem Übergang zu einem Ansteigen, also vor dem Punkt 25, die Steigung der Kurve 24. In der Figur 3 wird die Steigung der Kurve 24 fortlaufend größer, so daß die Kurve 24 vor dem Punkt 25 immer stärker fällt.

Aus dieser Veränderung der Steigung der Kurve 24 kann das Steuergerät 18 ebenfalls auf eine Veränderung z.B. der NOx-Anteile im Abgas der Brennkraftmaschine 1 schließen und entsprechende Adaptionen zur Korrektur des Modells des Speicherkatalysators vornehmen. Dabei ist es in diesem Zusammenhang möglich, Veränderungen der Steigung der Kurve 24 in positiver, wie auch in negativer Richtung zu erkennen und in Abhängigkeit davon entsprechende Adaptionen durchzuführen.

## Patentansprüche

1. Verfahren zum Betreiben einer Brennkraftmaschine (1) insbesondere eines Kraftfahrzeugs, bei dem Kraftstoff in einer fetten und in einer mageren Betriebsart in einen Brennraum (4) eingespritzt wird, bei dem zwischen der fetten und der mageren Betriebsart umgeschaltet wird, und bei dem Stickoxide in einem Katalysator (12) gespeichert werden, **dadurch gekennzeichnet, daß** eine Gütefunktion (G) für die Speicherung von Stickoxiden in dem Katalysator (12) in Abhängigkeit von der Zeitdauer (DT) ermittelt wird, nach der eine fette Betriebsart durch den Katalysator (12) durchbricht, daß die Gütefunktion (G) in Abhängigkeit von einer Mehrzahl aufeinanderfolgender Zeitdauern (DT) ermittelt wird, und daß in Abhängigkeit von der Gütefunktion (G) die Umschaltung zwischen den Betriebsarten beeinflußt wird.

2. Verfahren nach Anspruch 1, **dadurch gekennzeichnet, daß** eine Änderung der Steigung der Gütefunktion (G) ermittelt wird.

3. Verfahren nach einem der Ansprüche 1 oder 2, **dadurch gekennzeichnet, daß** die Umschaltung zwischen den Betriebsarten adaptiert wird.

4. Verfahren nach Anspruch 3, **dadurch gekennzeichnet, daß** die Be- und/oder Entladezeiten für die Speicherung von Stickoxiden in dem Katalysator (12) adaptiert werden.

5. Computerpogramm für eine Brennkraftmaschine (10) insbesondere eines Kraftfahrzeugs, mit einer Abfolge von Befehlen, die dazu geeignet sind, das Verfahren nach einem der Ansprüche 1 bis 4 durchzuführen, wenn sie auf einem Computer ausgeführt werden.

6. Computerpogramm nach Anspruch 5, wobei die Abfolge von Befehlen auf einem computerlesbaren Datenträger gespeichert ist.

7. Brennkraftmaschine (1) insbesondere eines Kraftfahrzeugs, mit einem Brennraum (4), in den Kraftstoff in einer fetten und in einer mageren Betriebsart einspritzbar ist, mit einem Katalysator (12), in dem Stickoxide speicherbar sind, und mit einem Steuergerät (18) zum Umschalten zwischen der fetten und der mageren Betriebsart, **dadurch gekennzeichnet, daß** das Mittel zur Durchführung der Schritte des Verfahrens nach Anspruch 1 vorhanden, sind, womit durch das Steuergerät (18) eine Gütefunktion (G) für die Speicherung von Stickoxiden in dem Katalysator (12) in Abhängigkeit von der Zeitdauer (DT) ermittelt wird, nach der eine fette Betriebsart durch den Katalysator (12) durchbricht, daß die Gütefunktion (G) in Abhängigkeit von einer Mehrzahl aufeinanderfolgender Zeitdauern (DT) ermittelt wird, und daß durch das Steuergerät (18) in Abhängigkeit von der Gütefunktion (G) die Umschaltung zwischen den Betriebsarten beeinflußbar ist.

8. Steuergerät (18) zur Anwendung in einer Brennkraftmaschine (1) insbesondere eines Kraftfahrzeugs, wobei die Brennkraftmaschine (1) mit einem Brennraum (4) versehen ist, in den Kraftstoff in einer fetten und in einer mageren Betriebsart einspritzbar ist, sowie mit einem Katalysator (12), in dem Stickoxide speicherbar sind, und wobei das Steuergerät (18) zum Umschalten zwischen der fetten und der mageren Betriebsart vorgesehen ist, **dadurch gekennzeichnet, daß** das Mittel zur Durchführung der Schritte des Verfahrens nach Anspruch 1 vorhanden sind, womit durch das Steuergerät (18) eine Gütefunktion (G) für die Speicherung von Stickoxiden in dem Katalysator (12) in Abhängigkeit von der Zeitdauer (DT) ermittelt wird, nach der eine fette Betriebsart durch den Katalysator (12) durchbricht, daß die Gütefunktion (G) in Abhängigkeit von einer Mehrzahl aufeinanderfolgender Zeitdauern (DT) ermittelt wird, und daß durch das Steuergerät (18) in Abhängigkeit von der Gütefunktion (G) die Umschaltung zwischen den Betriebsarten beeinflußbar ist.

## Claims

1. Method for operating an internal combustion engine (1), in particular of a motor vehicle, in which fuel is injected into a combustion chamber (4) in a rich operating mode and in a lean operating mode, in which the engine is switched between the rich and lean operating modes, and in which nitrogen oxides are stored in a catalytic converter (12), **characterized in that** a quality function (G) for the storage of nitrogen oxides in the catalytic converter (12) is determined as a function of the duration of time (DT) which it takes for a rich operating mode to break through the catalytic converter (12), **in that** the quality function (G) is determined as a function of a plurality of successive durations of time (DT), and **in that** the switching of the engine between the operating modes is influenced as a function of the quality function (G).

2. Method according to Claim 1, **characterized in that** a change in the inclination of the quality function (G) is determined.

3. Method according to Claim 1 or 2, **characterized in that** the switching of the engine between the operating modes is adapted.

4. Method according to Claim 3, **characterized in that** the loading and/or unloading times for the storage of nitrogen oxides in the catalytic converter (12) are adapted.

5. Computer program for an internal combustion engine (10), in particular of a motor vehicle, having a sequence of commands which are suitable for carrying out the method according to one of Claims 1 to 4 when they are executed on a computer.

6. Computer program according to Claim 5, in which the sequence of commands is stored on a computer-readable data carrier.

7. Internal combustion engine (1), in particular of a motor vehicle, having a combustion chamber (4), into which fuel can be injected in a rich operating mode and a lean operating mode, having a catalytic converter (12), in which nitrogen oxides can be stored, and having a control unit (18) for switching the engine between the rich and lean operating modes, **characterized in that** the means for carrying out the steps of the method according to Claim 1 are present, by which means the control unit (18) determines a quality function (G) for the storage of nitrogen oxides in the catalytic converter (12) as a function of the duration of time (DT) which it takes for a rich operating mode to break through the catalytic converter (12), **in that** the quality function (G) is determined as a function of a plurality of successive durations of time (DT), and **in that** the switching of the engine between the operating modes can be influenced by the control unit (18) as a function of the quality function (G).

8. Control unit (18) for use in an internal combustion engine (1), in particular of a motor vehicle, the internal combustion engine (1) being provided with a combustion chamber (4) into which fuel can be injected in a rich operating mode and a lean operating mode, and with a catalytic converter (12) in which nitrogen oxides can be stored, and the control unit (18) being intended to switch the engine between the rich and lean operating modes, **characterized in that** the means for carrying out the steps of the method according to Claim 1 are present, by which means the control unit (18) determines a quality function (G) for the storage of nitrogen oxides in the catalytic converter (12) as a function of the duration of time (DT) which it takes for a rich operating mode to break through the catalytic converter (12), **in that** the quality function (G) is determined as a function of a plurality of successive durations of time (DT), and **in that** the switching of the engine between the operating modes can be influenced by the control unit (18) as a function of the quality function (G).

## Revendications

1. Procédé de gestion d'un moteur à combustion interne (1), notamment d'un véhicule automobile, dans lequel le carburant est injecté dans une chambre de combustion (4) pendant un mode de fonctionnement riche et un mode de fonctionnement pauvre, une commutation ayant lieu entre les modes de fonctionnement riche et pauvre, des oxydes d'azotes étant accumulés dans un catalyseur (12),
**caractérisé en ce qu'**
une fonction de qualité (G) pour l'accumulation des oxydes d'azotes dans le catalyseur (12) est déterminée en fonction de la durée (DT) après laquelle on interrompt un mode de fonctionnement riche à travers le catalyseur (12), la fonction de qualité (G) est déterminée en fonction d'une pluralité de durées (DT) successives, et la commutation entre les modes de fonctionnement est influencée en fonction de la fonction de qualité (G).

2. Procédé selon la revendication 1,
**caractérisé en ce qu'**
une variation de la pente de la fonction de qualité (G) est déterminée.

3. Procédé selon l'une quelconque des revendications 1 ou 2,
**caractérisé en ce que**
la commutation entre les modes de fonctionnement est ajustable.

4. Procédé selon la revendication 3,
**caractérisé en ce que**
les temps de chargement et/ou de déchargement pour l'accumulation d'oxydes d'azotes dans le catalyseur (12) sont adaptés.

5. Programme informatique pour un moteur à combustion interne (10), notamment d'un véhicule automobile, avec une séquence d'instructions aptes à réaliser le procédé selon l'une des revendications 1 à 4, lorsqu'il est exécuté sur un ordinateur.

6. Programme informatique selon la revendication 5, la séquence d'instructions étant stockée sur un support de données lisibles par ordinateur.

7. Moteur à combustion interne (7), notamment d'un véhicule automobile, comprenant une chambre de combustion (4) dans laquelle le carburant peut être injecté pendant un mode de fonctionnement riche et un mode de fonctionnement pauvre, comprenant un catalyseur (12) dans lequel des oxydes d'azotes peuvent être accumulés, et comprenant un appareil de commande (18) pour commuter entre les modes de fonctionnement riche et pauvre,
**caractérisé en ce que**
des moyens pour réaliser les étapes du procédé selon la revendication 1, permette à l'appareil de commande (18) de déterminer une fonction de qualité (G) pour l'accumulation des oxydes d'azotes dans le catalyseur (12) en fonction de la durée (DT) après laquelle on interrompt un mode de fonctionnement riche à travers le catalyseur (12), la fonction de qualité (G) est déterminée en fonction d'une pluralité de durées (DT) successives, et l'appareil de commande (18) influence la commutation entre les modes de fonctionnement influence en fonction de la fonction de qualité (G).

8. Appareil de commande (18) pour utilisation dans un moteur à combustion interne (1), notamment d'un véhicule automobile, le moteur à combustion interne (1) étant muni d'une chambre de combustion (4) dans laquelle du carburant peut être injecté dans un mode de fonctionnement riche et mode de fonctionnement pauvre, comprenant également un catalyseur (12) dans lequel des oxydes d'azote peuvent être accumulés, l'appareil de commande (18) étant prévu pour la commutation entre les modes de fonctionnement riche et pauvre,
**caractérisé en ce que**
des moyens pour réaliser les étapes du procédé selon la revendication 1 permette à l'appareil de commande (18) de déterminer une fonction de qualité (G) pour l'accumulation des oxydes d'azote dans le catalyseur (12) en fonction de la durée (DT) après laquelle on interrompt un mode de fonctionnement riche à travers le catalyseur (12), la fonction de qualité (G) est déterminée en fonction d'une pluralité de durées (DT) successives, et l'appareil de commande (18) influence la commutation entre les modes de fonctionnement en fonction de la fonction de qualité (G).
